# EUROPEAN PATENT APPLICATION

(11) **EP 3 616 767 A1**
(43) Date of publication of application: **04.03.2020**
(21) Application number: 19193410.8
(22) Date of filing: 23.08.2019
(51) Int. Cl.: B01D 1/00, B01D 1/06, B01D 1/16, B01D 5/00

(54) **SOLVENT RECOVERY SYSTEM**

(30) Priority: 29.08.2018 US 201862724509 P
(71) Applicant: Van Lenten, Raymond, III, Grass Valley, CA 95945 (US)
(72) Inventor: Van Lenten, Raymond, III, Grass Valley, CA 95945 (US)
(74) Representative: Loo, Chi Ching

(57) **Abstract**

A solvent recovery system allows for a continuous recovery of ethanol, alcohol, or other solvent from an oil/material feed. The solvent recovery system includes a feed pump (1), a primary condenser (2), a heating system (3), an evaporator (10), a discharge pump (13), and a control system (14). The feed pump (1) is used to drive a fluid which can be retrieved from an oil/material feed. The primary condenser (2) is a device able to condense the fluid from a gas to liquid state through a cooling method. The heating system (3) includes devices able to heat the fluid in order to prepare the fluid to change into a gas state. The evaporator (10) is a device able to process the fluid from a liquid to gas state. The discharge pump (13) is used to output ethanol, alcohol, or other solvent, recovered from the fluid. The control system (14) allows a user manually or electronically manage and control the solvent recovery system.

## Description

The current application claims a priority to the U.S. Provisional Patent application serial number 62/724,509 filed on August 29, 2018.

### FIELD OF THE INVENTION

The present invention generally relates to falling film evaporators and solvent recovery systems. More specifically, the present invention relates to solvent recovery systems with integrated falling film evaporators adapted for efficient mass volume recovery applications.

### BACKGROUND OF THE INVENTION

Solvent recovery systems involve processes where various materials in a mixed stream are retrieved from the stream to be reused for other processes. By recovering these reusable materials, the demand for raw materials is reduced which helps maintain costs down as well as meet various regulatory requirements, such as cleaning waste streams before disposal. Various solvent recovery systems have been provided for both large-scale and small-scale applications. For example, rotary evaporators have been the industry standard for low volume production due to their inexpensive costs. However, these systems provide slow recovery rates and have large footprints and higher labor-to-output costs, which make these systems inefficient at higher levels of production. For larger-scale applications, falling film evaporators are more efficient and more popular. Falling film evaporators work by dispersing material down a heated column to evaporate the solvent from the material as the material travels down the column. The evaporated solvent is captured and condensed so the recovered solvent can be collected in a separate vessel. The leftover, nearly solvent-less material is collected in a separate vessel, usually placed beneath the evaporating column. While falling film evaporators allow for more efficient mass volume production, the feed systems of most falling film evaporators often limit the rate at which materials are fed into the falling film evaporator. In consequence, the rate and efficiency at which solvents are recovered from a material stream over a length of time are limited. Therefore, a more efficient solvent recovery system which utilizes a falling film evaporator and an improved feed and distribution system is beneficial and necessary.

An objective of the present invention is to provide a solvent recovery system designed to efficiently and effectively process large amounts of high-quality material. The solvent recovery system preferably allows for the continuous recovery of Ethanol and/or alcohol from an oil/material feed. The solvent recovery system can operate at high output levels while dramatically reducing the overall footprint of the system, the energy costs, consumable costs, as well as staff required to operate the solvent recovery system. The solvent recovery system can provide a recovery rate of up to 300 gallons per hour with an extremely low residence time but can further be modified for custom applications. In the preferred embodiment of the present invention, the solvent recovery system provides an improved feed system to the falling film evaporator. The feed system of the solvent recovery system preferably comprises a gear pump and vacuum arranged to continuously push material to the top of the heat exchanger column of the falling film evaporator and through the spray nozzle to be atomized and evaporated as the material falls down the column. The improved feed system of the solvent recovery system allows for more continuous flow of material and more efficient processing of material, as well as more efficient dispersal through the heat exchanger. In further embodiments of the present invention, the solvent recovery system can be modified to further provide a discharge system for the continuous discharge of the recovered solvents and residues from the solvent recovery system.

### BRIEF DESCRIPTION OF THE DRAWINGS

FIG. **1** is a schematic view of the present invention.
FIG. **2** is a schematic view of the present invention displaying the operative coupling of the control system.
FIG. **3** is a schematic view of the first embodiment of the present invention.
FIG. **4** is a schematic view of the first embodiment of the present invention displaying the operative coupling of the residue discharge pump with the control system.
FIG. **5** is an exemplary front view of the first embodiment of the present invention.
FIG. **6** is a schematic view of the second embodiment of the present invention.
FIG. **7** is a schematic view of the second embodiment of the present invention displaying the operative coupling of the three-way valve with the control system.
FIG. **8** is a schematic view displaying the electrical connections of the control system.
FIG. **9** is an exemplary front view of the second embodiment of the present invention.
FIG. **10** is a schematic view of third embodiment of the present invention.
FIG. **11** is a schematic view of the third embodiment of the present invention displaying the operative coupling of the secondary condenser with the control system.
FIG. **12** is an exemplary front view of the third embodiment of the present invention.

### DETAIL DESCRIPTIONS OF THE INVENTION

All illustrations of the drawings are for the purpose of describing selected versions of the present invention and are not intended to limit the scope of the present invention.

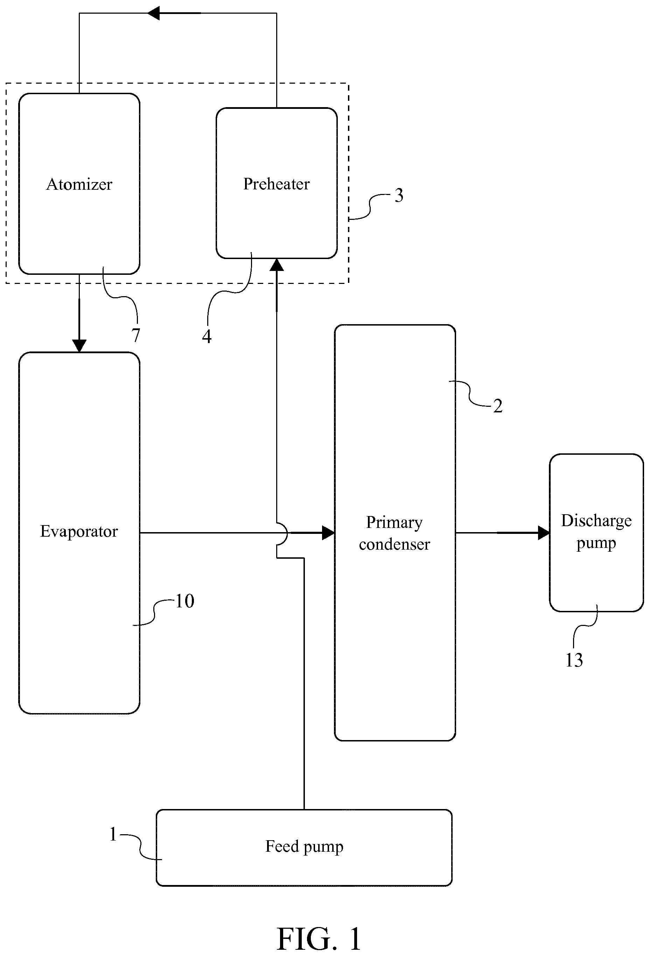

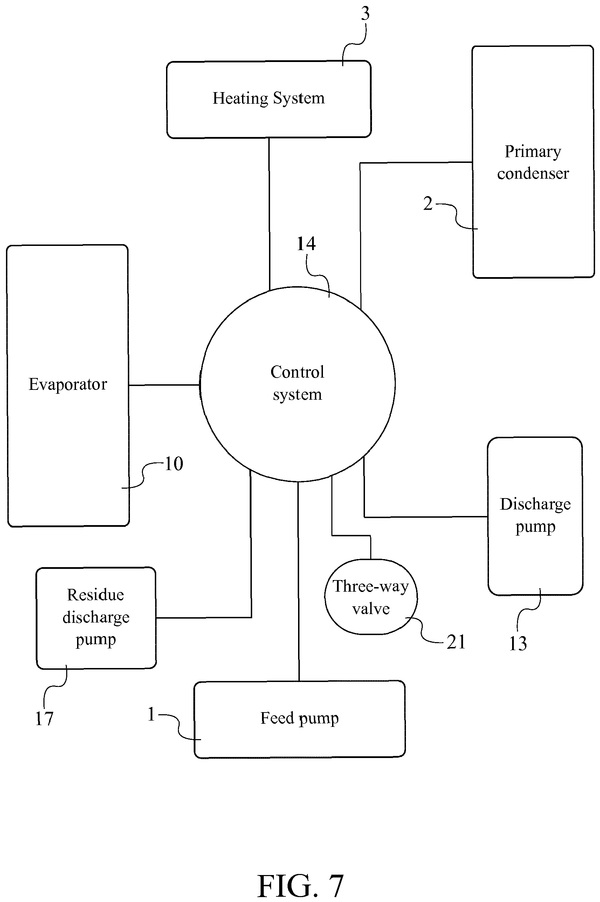

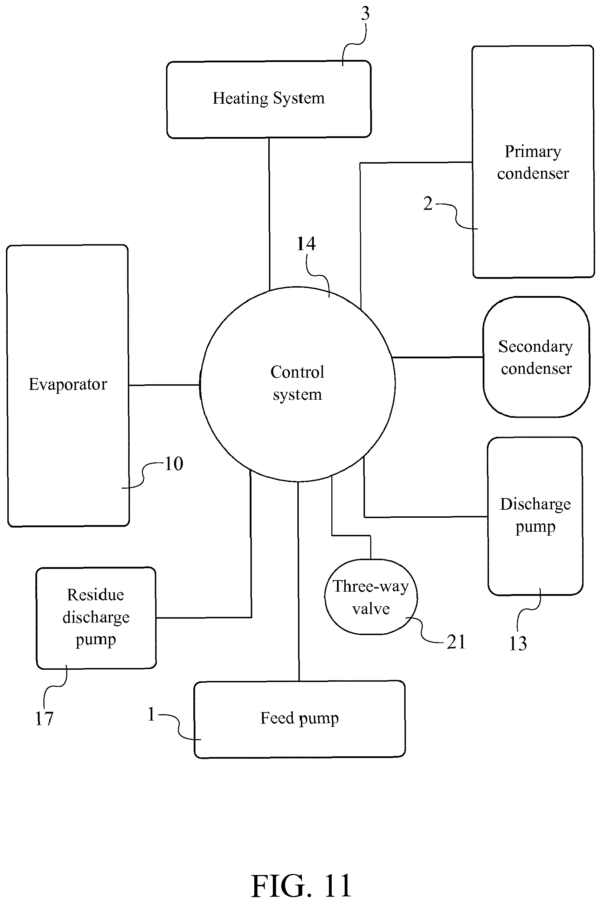

In reference to FIGS. **1** through **12****,** the present invention is a solvent recovery system that allows for a continuous recovery of ethanol, alcohol, or other solvent from an oil/material feed. The present invention comprises a feed pump **1,** a primary condenser **2,** a heating system **3,** an evaporator **10,** a discharge pump **13,** and a control system **14.** The feed pump **1** is used to drive a fluid which can be retrieved from an oil/material feed into the present invention. The primary condenser **2** is a device able to condense the fluid from a gas to liquid state through a cooling method. The heating system **3** includes devices able to heat the fluid in order to prepare the fluid to change into a gas state. The evaporator **10** is a device able to process the fluid from a liquid to gas state. The discharge pump **13** is used to output ethanol, alcohol, or other solvent or material, recovered from the fluid, from the present invention. The control system **14** allows a user manually or electronically manage and control the present invention.

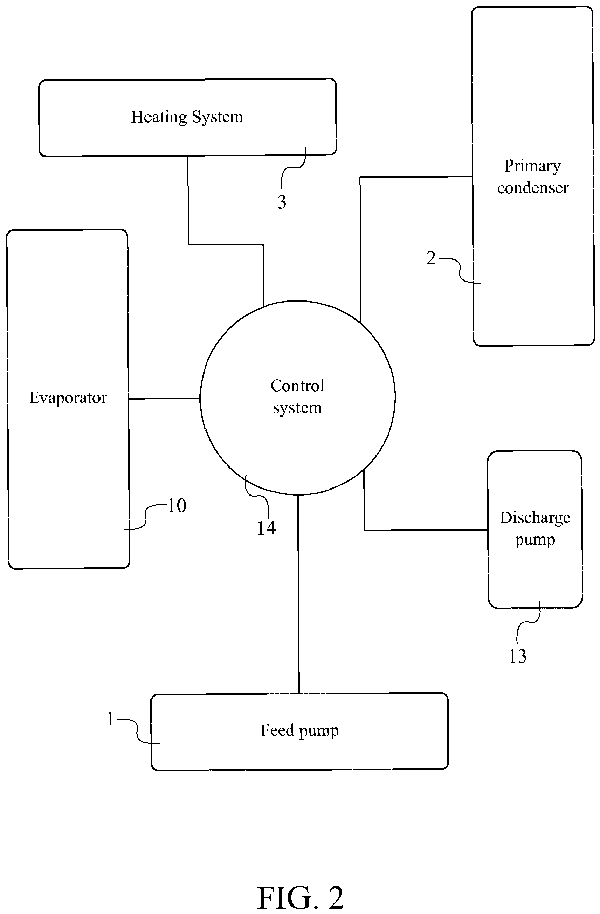

The general configuration of the aforementioned components allows the present invention to effectively allow for a continuous recovery of ethanol and/or alcohol from an oil/material feed. With reference to FIGS. **1** and **2****,** the feed pump **1** is in fluid communication with the heating system **3.** This arrangement allows the fluid, retrieved from an oil/material, to flow from the feed pump **1** and into the heating system **3** in order for the fluid to be heated. In the preferred embodiment, pipes or tubes are used to establish the fluid communication between the feed pump **1** and the heating system **3.** Further, the heating system **3** is in fluid communication with the evaporator **10.** This arrangement allows the fluid to flow from the heating system **3** into the evaporator **10.** In further detail, the fluid is preheated by the heating system **3** in order to the prepare to the fluid to be converted from a liquid to gas state by the evaporator **10.** In the preferred embodiment, pipes or tubes are used to establish the fluid communication between the heating system **3** and the evaporator **10.** Moreover, the evaporator **10** is in fluid communication with the discharge pump **13** through the primary condenser **2.** This allows the fluid to flow from the evaporator **10** into the primary condenser **2** and then through the discharge pump **13.** In further detail, the fluid is changed into a gas state by the evaporator **10** and then cooled back to a liquid state by the primary condenser **2.** In the preferred embodiment of the present invention, pipes or tubes are used to establish the fluid communication between the evaporator **10,** the discharge pump **13,** and the primary condenser **2.** Further, the feed pump **1,** the primary condenser **2,** the heating system **3,** the evaporator **10,** and the discharge pump **13** are operatively coupled to the control system **14.** This arrangement allows the control system 14 **to** manage the feed pump **1,** the at least one condenser, the heating system **3,** the evaporator **10,** and the discharge pump **13.** Thus, the user is able to manually or electronically control and manage the present invention through the control system **14.**

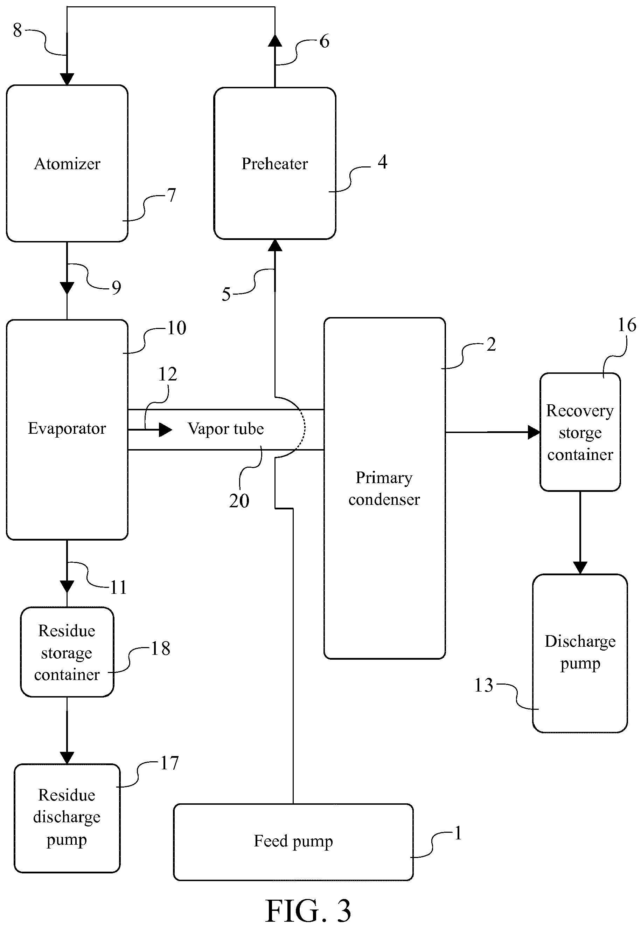

In a first embodiment of the present invention and with reference to FIGS. **3** through **5****,** the heating system **3** comprises a preheater **4** and an atomizer **7** in order to heat the fluid. The preheater **4** is used to heat the fluid after being pushed through feed pump 1. After the fluid has been heated by the preheater **4,** the atomizer **7** is used to superheat the fluid in order to emit the fluid as a fine spray. Further, the atomizer **7** is able to heat the fluid without boiling the liquid. The fluid is preferably heated to 180 degrees Fahrenheit after going through the preheater **4** and the atomizer **7.** The preheater **4** comprises a first inlet **5** and a first outlet **6.** The atomizer **7** comprises a second inlet **8** and a second outlet **9.** The feed pump **1** is in fluid communication with the first inlet **5.** In the preferred embodiment, a pipe or tube is used to establish the fluid communication between the feed pump **1** and the first inlet **5.** This arrangement allows the fluid to flow from the feed pump **1** into the preheater **4.** Further, the first outlet **6** is in fluid communication with the second inlet **8.** In the preferred embodiment, a pipe or tube is used to establish the fluid communication between the preheater **4** and the atomizer **7.** This arrangement allows the fluid to flow from the preheater **4** to the atomizer **7.** Further, the second outlet **9** is in fluid communication with the evaporator **10.** In the preferred embodiment, a pipe or tube is used to establish the fluid communication between the atomizer **7** and the evaporator **10.** This arrangement allows the fluid to flow from the atomizer **7** to the evaporator **10.**

Further in the first embodiment and with reference to FIG. **3****,** the present invention may further comprise a recovery storage container **16.** The recovery storage container **16** is used to store the ethanol, alcohol, or other solvent, recovered from the fluid. The primary condenser **2** is in fluid communication with the discharge pump **13** through the recovery storage container **16.** A pipe or tube may be used to establish the fluid communication between the discharge pump **13** and the recovery storage container **16.** Thus, the recovered solvent is stored by the recovery storage container **16** and then outputted by the discharge pump **13.**

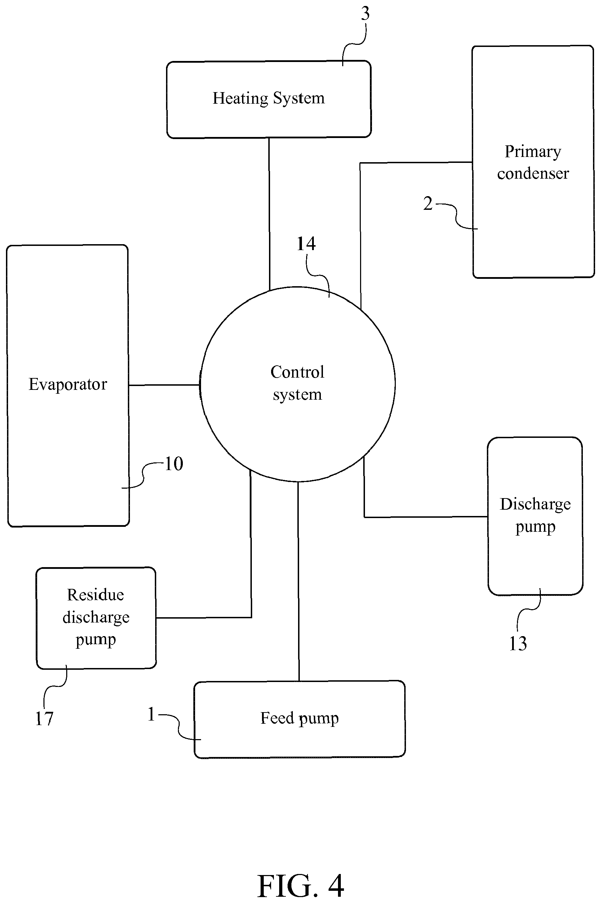

Further in the first embodiment and with reference to FIGS. **3** and **4****,** the present invention may further comprise a residue discharge pump **17.** The residue discharge pump **17** is used to output any residue produced when the fluid flows through the evaporator **10.** The evaporator **10** comprises a third outlet **11.** The third outlet **11** is in fluid communication with the residue discharge pump **17.** A pipe may be used to establish the fluid communication between the third outlet **11** and the residue discharge pump **17.** This arrangement allows any residue to flow from the evaporator **10** and into the residue discharge pump **17.** The residue discharge pump **17** is operatively coupled to the control system **14.** This allows the control system **14** to manage the residue discharge pump **17.** Thus, the user can manually or automatically manage and control the residue discharge pump **17** through the control system **14.**

Further in the first embodiment and with reference to FIG. **3****,** the present invention may further comprise a residue storage container **18.** The residue storage container **18** is used to store any residue outputted by the evaporator **10.** The evaporator **10** is in fluid communication with the residue discharge pump **17** through the residue storage container **18.** A pipe or tube may be used to establish the fluid communication between the residue storage container **18** and the residue discharge pump **17.** This arrangement allows any residue to flow from the evaporator **10,** into the residue storage container **18** and then removed by the residue discharge pump **17.**

Further in the first embodiment and with reference to FIG. **3****,** the present invention may further comprise a vapor tube **20.** The vapor tube **20** is a specially-designed tube for vapor/gas flow. Further, the vapor tube **20** is able to pull the fluid from the evaporator **10** into the primary condenser **2** through an integrated vacuum device. The evaporator **10** comprises a fourth outlet **12.** The fourth outlet **12** is in fluid communication with the primary condenser **2** through the vapor tube **20.** Thus, the fluid, in a gas state, is able to safely flow from the evaporator **10** and into the primary condenser **2** in order to be cooled from a gas to liquid state.

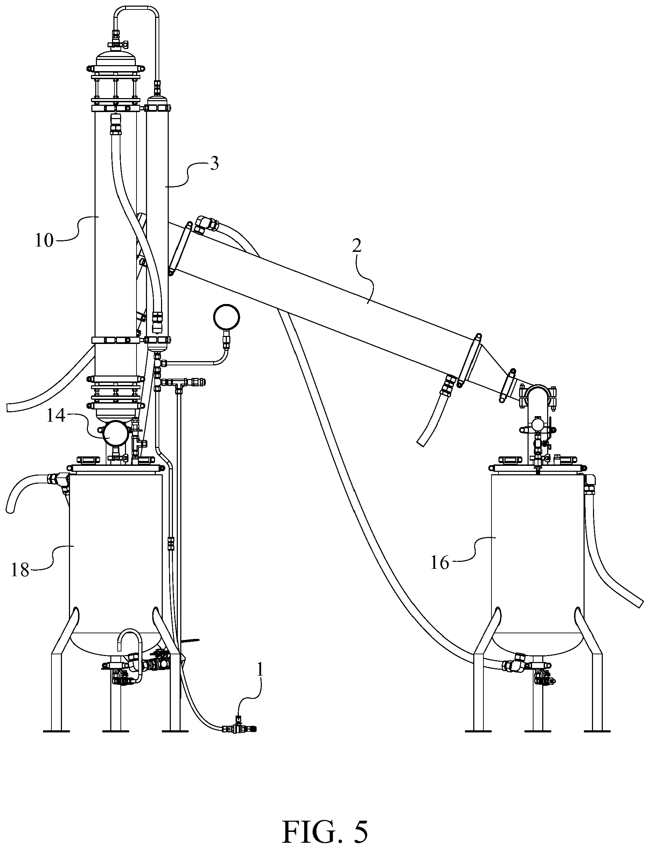

Further in the first embodiment and with reference to FIG. **5****,** the control system **14** is at least one analog control. The at least one analog control may be a control switch, control knob, or other type of input device. The at least one analog control allows the user to manually operate the present invention.

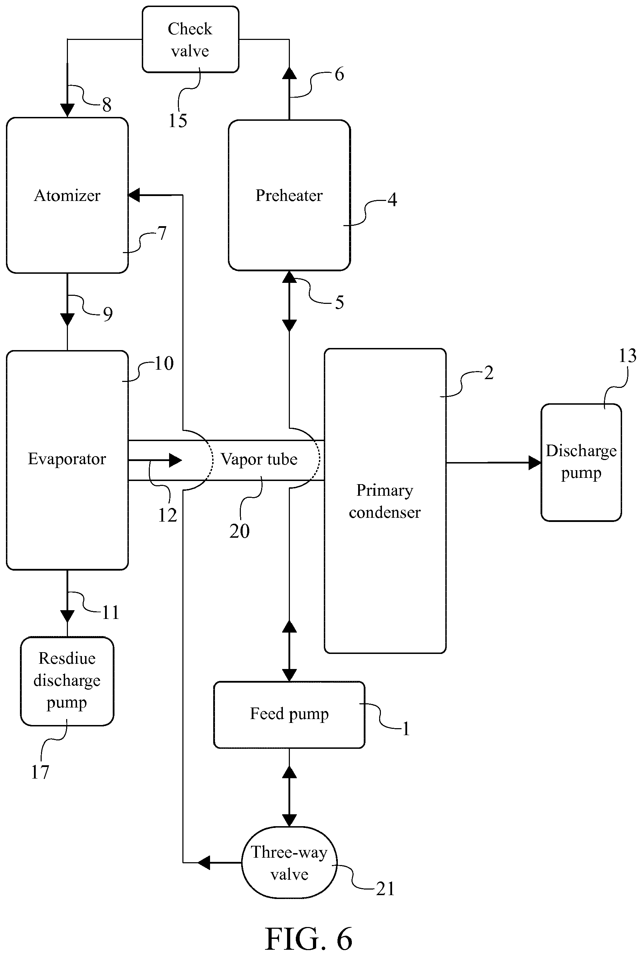

In the second embodiment and with reference to FIGS. **6** through **9****,** the present invention includes what is described in the first embodiment excluding the recovery storage container **16** and the residue storage container **18** and may further comprise a check valve **15.** The check valve **15** is a device that prevents the fluid to flow backwards. In further detail, the check valve **15** prevents the fluid to flow from the atomizer **7** to the preheater **4.** The first outlet **6** is in fluid communication with the second inlet **8** through the check valve **15.** Thus, the fluid may only flow from the preheater **4** to the atomizer **7.** automatically manage and control the check valve **15** through the control system **14.**

Further in the second embodiment of the present invention and with reference to FIGS. **6** through **9****,** the present invention may further comprise a three-way valve **21.** The three-way valve **21** is a device used to divert flow of the fluid. In further detail, the three-way valve **21** in used for a "recycle" function of the present invention. Solvent may be trapped inside the preheater **4** after overall process of the present invention because the preheater **4** is filled from the bottom up. For maintenance and cleaning, the three-way valve **21** switches direction and the feed pump **1** spins backwards in order to send the trapped solvent to the atomizer **7** and then the evaporator **10** for reclaiming. The three-way valve **21** is in bidirectional fluid communication with the preheater **4** through the feed pump **1.** This arrangement allows fluid to flow from the three-way valve **21** and into the preheater **4.** Further, this allows trapped solvent to flow from the preheater **4** and back into the feed pump **1.** The feed pump **1** is a conduit between the three-way valve **21** and the preheater **4.** Further, the feed pump **1** is a unidirectional fluid communication with the atomizer **7** through the three-way valve **21.** This arrangement allows fluid to flow from the feed pump **1** and into the atomizer **7.** This allows the trapped solvent to be reclaimed. The three-way valve **21** is a conduit between the atomizer 7 and the feed pump **1.** This arrangement drains the preheater **4,** with the check valve **15** preventing backflow into the preheater **4,** through the atomizer **7.** Further, the three-way valve **21** is operatively coupled to the control system **14.** Thus, the user may control or manage the three-way valve **21** through the control system **14.**

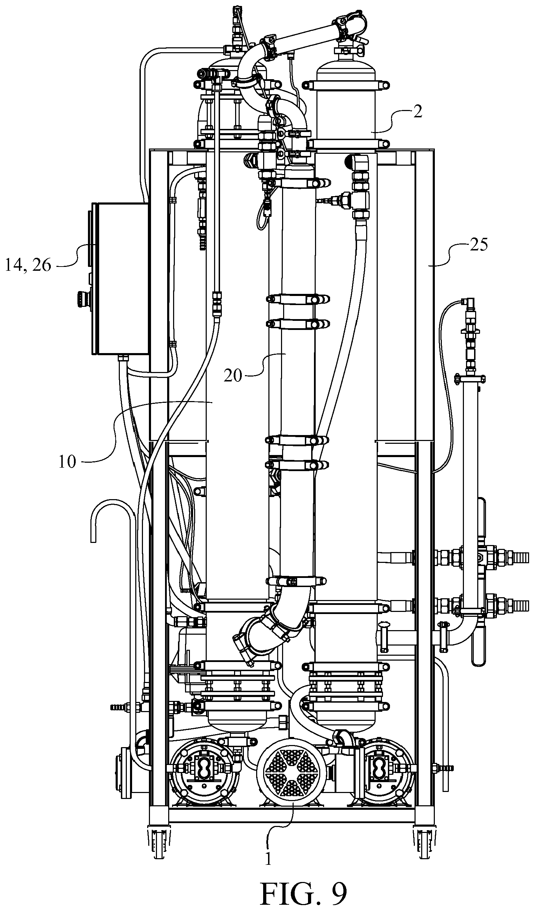

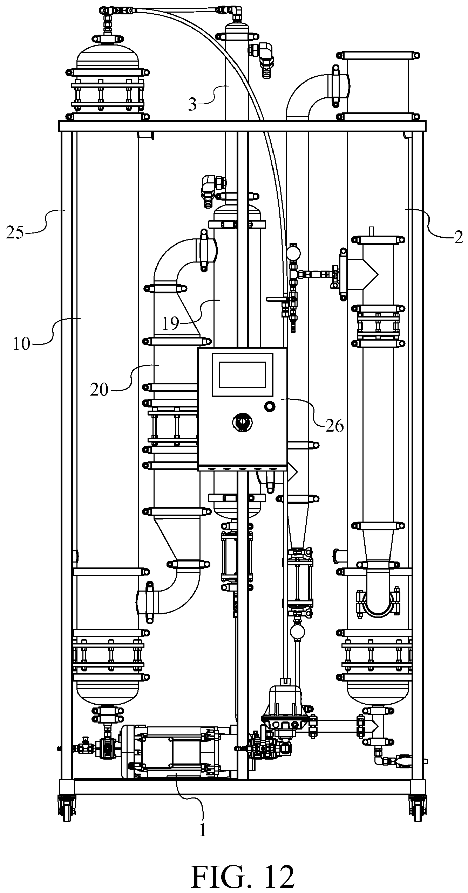

Further in the second embodiment and with reference to FIG. **9** and **12****,** the present invention may further comprise a structural frame **25.** The structural frame **25** is used to support the major devices of the present invention. The feed pump **1,** the primary condenser **2,** the heating system **3,** the evaporator **10,** the discharge pump **13,** and the control system **14** are mounted onto the structural frame **25.** Thus, the major devices of the present invention are supported and reinforced by the structural frame **25.** In further detail, the major devices of the present invention may be fastened onto the structural frame **25** through the use of brackets. Further, the structural frame **25** may comprise a plurality of casters. The plurality of casters allows the present invention to be transported when desired.

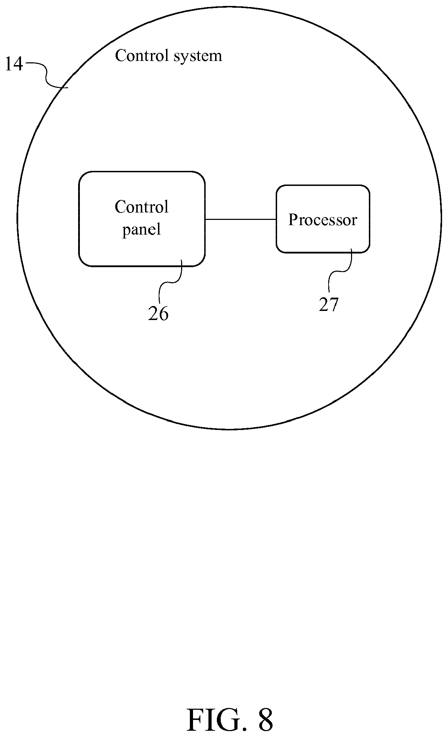

Further in the second embodiment and with reference to FIG. **8****,** the control system **14** comprises a processor **27** and a control panel **26.** The processor **27** is a device used to process inputs from the control panel **26.** The control panel **26** is an interface which allows a user to input instructions. In order for the processor **27** to communicate with the control panel **26,** the control panel **26** is electronically connected to the processor **26.** The preferred embodiment of the control panel **26** is a touch-screen display within the present invention.

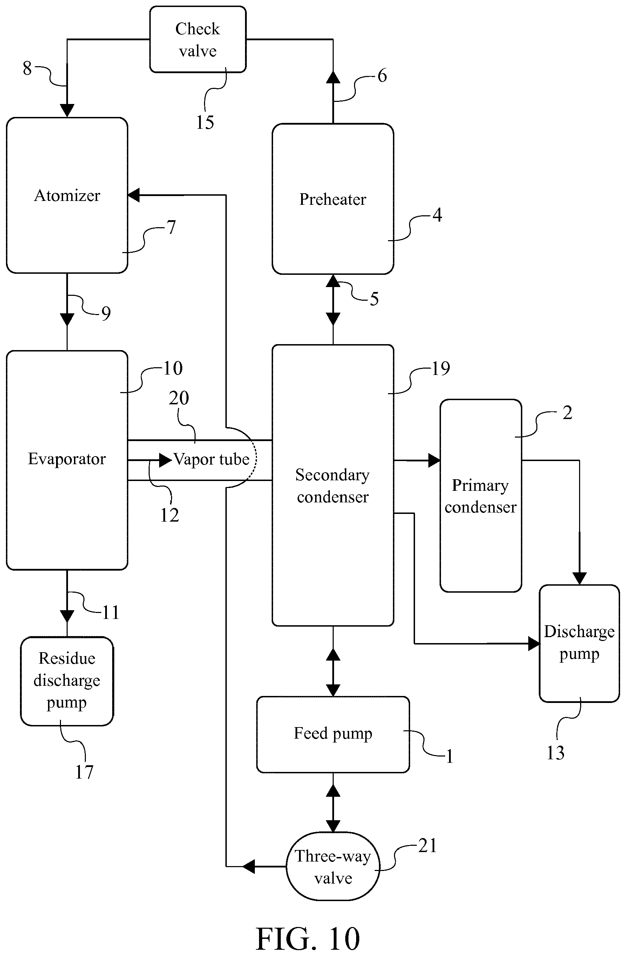

In a third embodiment of the present invention and with reference to FIGS. **10** through **12****,** the present invention includes the components described in the second embodiment and may further comprise a secondary condenser **19.** Similar to the primary condenser **2,** the secondary condenser **19** is used to cool a fluid from a gas to liquid state. In the third embodiment, the secondary condenser **19** is in indirect fluid communication with the discharge pump **13** through the primary condenser **19.** In further detail, condensed solvent discharge from the secondary condenser **2** is shared with the primary condenser **19.** In the third embodiment, the secondary condenser **2** is also in direct fluid communication with the discharge pump **13.** Thus, solvent flows out the discharge pump **13** from the primary condenser **2** and the secondary condenser **19.** Any excess vapor, from the condensed solvent discharge, flows into the primary condenser **2** in order to be condensed back into a liquid. Moreover in the third embodiment, the three-way valve **21,** the feed pump **1,** the secondary condenser **19,** and the preheater **4** are in serial bidirectional fluid communication with each other. This allows fluid to flow from the three-way valve **21,** to the feed pump **1,** to the secondary condenser **19** and then into the preheater **4.** Further, trapped solvent can flow from the preheater **4,** to the secondary condenser **19,** and into the feed pump **1.** The feed pump **1** is a conduit between the three-way valve **21** and the secondary condenser **19.** The feed pump **1** is in unidirectional fluid communication with the atomizer **7** through the three-way valve **21.** This allows the trapped solvent to be reclaimed. The three-way valve **21** is a conduit between the atomizer **7** and the feed pump **1.** The secondary condenser **19** is operatively coupled to the control system **14.** This allows the control system **14** to manage the secondary condenser **19.** Thus, the user can control and manage the secondary condenser **19** through the control system **14.**

The secondary condenser **19** is also plumbed in a manner which allows heat recovery from the evaporator **10.** The feed pump **1** is plumbed through the process side of the secondary condenser **19** and then to the heating system **3,** while hot vapor from the evaporator **10** is plumbed to the shell side of the secondary condenser **19.** This allows the hot gasses to preheat the liquid, and the room temperature or colder feed liquid condenses a portion of the hot vapor from the evaporator **10.** This allows for a more efficient recovery of heat from the present invention. In this embodiment, the preheater **4** is used to provide initial heat on start up, and to ensure that superheating of 180 degrees Fahrenheit or higher is achieved during normal operation. Further benefit is provided if subzero temperature feed liquid is used, as a great deal of energy is used to attain these temperatures. Previous inventions, in the same field, tax the heating system to preheat subzero liquid which draws more energy, instead of this more efficient present invention which provides an energy savings of roughly 15%.

In another embodiment of the present invention, the present invention may further comprise a plurality of first legs and at least one first lid. The plurality of first legs is used to support the recovery storage container **16.** Each of the plurality of first legs is laterally mounted to the recovery storage container **16.** The plurality of first legs is radially distributed around the recovery storage container **16.** This arrangement properly positions the plurality of first legs in order to effectively support the recovery storage container **16.** The at least one lid is used to conceal and protect the fluid inside the recovery storage container **16.** The at least one lid is press-fitted onto a first opening of the recovery storage container **16.** Further, the at least one first lid may comprise a first receiving portion. The first receiving portion traverses into the recovery storage container **16** through the at least one first lid. The first receiving portion is used to establish the fluid communication between the discharge pump **13** and the recovery storage container **16.**

Similarly and in another embodiment of the present invention, the present invention may further comprise a plurality of second legs and at least one second lid. The plurality of second legs is used to support the residue storage container **18.** Each of the plurality of second legs is laterally mounted to the residue storage container **18.** The plurality of second legs is radially distributed around the residue storage container **18.** This arrangement properly positions the plurality of second legs in order to effectively support the residue storage container **18.** The at least second lid is used to conceal and protect the fluid inside the residue storage container **18.** The at least one lid is press-fitted onto a second opening of the residue storage container **18.** Further, the at least one second lid may comprise a second receiving portion. The first receiving portion traverses into the residue storage container **18** through the at least one second lid. The second receiving portion is used to establish the fluid communication between the residue discharge pump **17** and the residue storage container **18.**

Although the invention has been explained in relation to its preferred embodiment, it is to be understood that many other possible modifications and variations can be made without departing from the spirit and scope of the invention as hereinafter claimed.

## Claims

1. A solvent recovery system comprises:
a feed pump;
a primary condenser;
a heating system;
an evaporator;
a discharge pump;
a control system;
the feed pump being in fluid communication with the heating system;
the heating system being in fluid communication with the evaporator;
the evaporator being in fluid communication with the discharge pump through the primary condenser; and
the feed pump, the primary condenser, the heating system, the evaporator, and the discharge pump being operatively coupled to the control system, wherein the control system is used to manage the feed pump, the at least one condenser, the heating system, the evaporator, and the discharge pump.

2. The solvent recovery system as claimed in claim 1 comprises:
a recovery storage container; and
the primary condenser being in fluid communication with discharge pump through the recovery storage container.

3. The solvent recovery system as claimed in claim 1 comprises:
a residue discharge pump;
the evaporator comprises a third outlet;
the third outlet being in fluid communication with the residue discharge pump; and
the residue discharge pump being operatively coupled to the control system, wherein the control system is used to manage the residue discharge pump.

4. The solvent recovery system as claimed in claim 4 comprises:
a residue storage container; and
the evaporator being in fluid communication with the residue discharge pump through residue storage container.

5. The solvent recovery system as claimed in claim 1 comprises:
a vapor tube;
the evaporator comprises a fourth outlet; and
the fourth outlet being in fluid communication with the primary condenser through the vapor tube.

6. The solvent recovery system as claimed in claim 1, wherein the control system is at least one analog control;

7. The solvent recovery system as claimed in claim 1 comprises:
the heating system comprises a preheater and an atomizer;
the preheater comprises a first inlet and a first outlet;
the atomizer comprises a second inlet and a second outlet;
the feed pump being in fluid communication with the first inlet;
the first outlet being in fluid communication with the second inlet; and
the second outlet being in fluid communication with the evaporator.

8. The solvent recovery system as claimed in claim 7 comprises:
a check valve; and
the first outlet being in fluid communication with the second inlet through the check valve.

9. The solvent recovery system as claimed in claim 1 comprises:
a three-way valve;
the heating system comprises a preheater and an atomizer;
the three-way valve being in bidirectional fluid communication with the preheater through the feed pump;
the feed pump being unidirectional fluid communication with the atomizer through the three-way valve; and
the three-way valve being operatively coupled to the control system, where in the control system is used to manage the three-way valve.

10. The solvent recovery system as claimed in claim 1 comprises:
the control system comprises a processor and a control panel;
the control panel being electronically connected to the processor;

11. The solvent recovery system as claimed in claim 1 comprises:
a structural frame; and
the feed pump, the primary condenser, the heating system, the evaporator, the discharge pump, and the control system being mounted onto the structural frame.

12. The solvent recovery system as claimed in claim 1 comprises:
a three-way valve;
a secondary condenser;
the heating system comprises a preheater and an atomizer;
the three-way valve, the feed pump, the secondary condenser, and the preheater being in serial bidirectional fluid communication with each other;
the feed pump being unidirectional fluid communication with the atomizer through the three-way valve;
the secondary condenser being in indirect fluid communication with the discharge pump through the primary condenser; and
the secondary condenser being operatively coupled to the control system, wherein the control system is used to manage the secondary condenser.

13. The solvent recovery system as claimed in claim 12, wherein the secondary condenser is in direct fluid communication with the discharge pump.
